# EUROPEAN PATENT SPECIFICATION

(11) **EP 1 436 068 B1**
(45) Date of publication and mention of the grant of the patent: **08.02.2006**
(21) Application number: 02768985.0
(22) Date of filing: 04.10.2002
(51) Int. Cl.: B01D 61/18, B01D 61/22, B01D 61/14

(54) **AUTOMATED FLUID FILTRATION SYSTEM FOR CONDUCTING SEPARATION PROCESSES, AND FOR ACQUIRING AND RECORDING DATA THEREABOUT**
AUTOMATISIERTES SYSTEM ZUR FILTRATION VON FLÜSSIGKEITEN SOWIE ZUR ERFASSUNG UND AUFZEICHNUNG VON MESSDATEN
SYSTEME AUTOMATIQUE DE FILTRATION DES LIQUIDES ET D'ACQUISITION ET ENREGISTREMENT DE DONNEES CORRESPONDANTES

(30) Priority: 09.10.2001 US 327911 P
(43) Date of publication of application: 14.07.2004
(73) Proprietor: MILLIPORE CORPORATION, Billerica, Massachusetts 01821 (US)
(72) Inventor: PETERSEN, Cristopher, Amherst, NH 03031 (US); WOLK, Bradley, Montara, CA 94037 (US)
(74) Representative: Henkel, Feiler & Hänzel
(86) International application number: PCT/US2002/031900
(87) International publication number: WO 2003/031035

(56) References cited:
- EP-A- 0 995 483
- DE-A- 19 740 327
- RU-C- 2 170 606
- US-A- 5 947 689
- US-A1- 2001 037 966

## Description

### I. FIELD

In general, the present invention is directed to a tangential flow filtration system, and more particularly, to an automated tangential flow filtration system for separation process analysis and development.

### II. BACKGROUND

The filtration of a liquid sample to either purify it by removal of particulate or molecular contaminants or to concentrate it for laboratory analysis is a well developed art. Tangential flow filtration systems are well suited for such applications because they generally permit higher fluxes and higher throughputs than corresponding dead-ended membrane filter systems.

As used herein the term "tangential flow" refers to flow that is essentially parallel to the surface of a membrane filter, and a "tangential flow filtration system" means a system wherein a large fraction of the liquid sample flows continuously in a direction essentially parallel to the membrane surface as opposed to a much smaller portion which flows through the membrane.

Ru-C-2170606 discloses an example of an automated flow filtration system in the prior art.

Tangential flow filtration systems can employ either "microporous", "ultrafiltration", or "reverse osmosis" membranes, the differentiation among these being well-established in the art based on pore size and/or size-based separation capability. The tangential flow of liquid across the surface of the membrane continuously sweeps away the particles or molecules which the membrane has retained from the portion of the fluid stream which has passed through the membrane, thus preventing concentration polarization and/or fouling, leading to improved performance in the quality of separation and flux.

In view of its favored role in the production of biopharmaceuticals and other drugs, efforts have been invested in accelerating the development of research-focussed, laboratory-scale TFF processes to commercial, industrial-scale TFF processes. Traditional methods of TFF process development require tedious, iterative methodologies that, when performed manually, consumes a developer's time, often taking weeks or months. Accordingly, there is now growing interest in a automatic process development device that a researcher can use to design and run TFF processes on a laboratory scale and, in the course thereof, automatically collect and/or process information needed for "scaling up" the subject processes for industrial-scale operation. Recent efforts along these lines take many forms.

For example, some often decide to design their own systems. And, for this purpose, some research entities have established large engineering departments to design their own automated process development systems (APDS). However, the costs associated with such undertaking are high. Only a few research entities with sufficient in-house resources and expertise can be expected to successfully support the development of custom-built APDS systems, thus limiting the public benefit associated with the more rapid drug development capability enabled through process automation.

Although so-called "plumbing shops" represent a low overhead/margin alternative to in-house engineering departments, their capabilities are presently limited to comparatively simple systems, although some shops are being more and more sophisticated with respect to control system capability. Accordingly, the use of plumbing shops is not expected to impinge favorably or significantly APDS development and use.

In constructing an automated tangential flow filtration process development system, it will be appreciated that applications involving the filtration or ultrafiltration of small volume samples present difficulties, particularly when such samples contain a substantial amount of material to be retained by the membrane. Because the volumes involved are small in these applications, the fabricated devices incorporating the membranes used to filter the sample must be small as well. Additionally, pumps and associated conduit interconnections of conventional tangential flow systems require increased priming volume which can be significant with respect to the overall volume of sample to be filtered. Therefore, although it is desirable to use tangential flow techniques for small volume filtration, small volume implementation remains challenging. Accordingly, the filtration of small sample volumes is usually accomplished through dead-ended techniques.

In light of the above, there is a need to accelerate the development and market availability of novel biopharmaceuticals, whilst still complying with all pertinent regulatory requirements. And, more particularly, there is a pronounced need to reduce the sample volume requirements required for conducting TFF-based process development studies, whereby the overall time and costs of drug development is also correspondingly reduced.

Other needs exist.

For example, there is also a need to reduce the costs and labor involved in managing data used for and resultant of TFF-based process development studies.

There is also a need for a system for process development having automated integrity test capability and computer-based guides for TFF optimization.

There is also a need to provide automated capability to perform feed-batch processing with recirculation to an auxiliary reservoir, thereby increasing batch capacity of the system without changing the size of the reservoir, and thereby preventing loop concentration.

There is also a need to provide an automated tangential flow filtration system having on-board cartridge history and/or tracking based on catalog and/or lot number, capable of recording hours of use and "clean-in-place" cycles, and that can ultimately be used to flag or trigger cartridge replacement.

And, there is also a need for an automated tangential flow filtration system having a modular design with sufficient flexibility to accommodate specific customer configurations, for example, custom configurations ranging from a basic TFF system to a comparatively more sophisticated "High Performance" TFF system.

### III. SUMMARY

The present invention, in a currently preferred embodiment, provides a fully-automated small-volume membrane tangential flow filtration system capable of concentrating 0.5 - 5.0 liter batches of a sample liquid to less than .02 liters, and - in the course thereof - acquiring and recording data thereabout. The process is fast, economical, accurate, and repeatable. The collected data is useful for process development, qualification, and validation.

More generally, the automated tangential flow filtration system comprises a reservoir, a tangential flow filtration module, an electronic data processing network, and a complement of pumps, valves, conduits, and sensors. The system components are selected and/or custom-engineered according to certain predetermined parameters (as set forth in the detailed discussion below), and assembled in an unprecedented combination affording, among other things, a comparatively low minimum recirculation volume requirement, particularly in relation to the system's filtration load capacity.

The system handles traditional membrane separation process development with ease as well as the latest so-called "HPTFF" and "C-Wall" process schemes. The benefits, in contrast to manually performing these tasks, are operator-independent process consistency, process speed, and automated data acquisition. Efficiency is further enhanced, for example, by the system's ability to run unattended overnight.

In light of the above, a principal object of the present invention is to provide an automated tangential flow filtration system for conducting separation processes with minimal sample volume requirements, and for acquiring and recording data thereabout. To solve this object the present invention provides an automated tangential flow filtration system as defined in claim 1.

Another aspect of the present invention is to provide a stand-alone, fully-integrated, self-contained automated tangential flow filtration system for conducting separation processes with minimum sample volume requirements, and for acquiring and recording data thereabout.

Another aspect of the present invention is to provide an automated fluid filtration system useful for conducting fluid separations and acquiring process data thereabout, the system utilizing an innovatively constructed reservoir, said reservoir suitable for containing a fluid sample and having a reservoir inlet and a reservoir outlet, said reservoir having a continuous internal volume comprising a substantially cylindrical upstream enclosure which tapers (or otherwise commences decreasing in internal diameter) at a downstream end into a distinct mixing zone, said mixing zone having a substantially fractionally smaller volume than the substantially cylindrical upstream enclosure, the reservoir inlet and outlet, and a process stream sensor, being positioned or otherwise active in said mixing zone.

Another aspect of the present invention is to provide an automated tangential flow filtration system assembled of modular functional components, allowing for comparative ease in disassembly, re-assembly, and modular expansion.

Another aspect of the present invention is to provide a tangential flow filtration system incorporating an innovatively engineered reservoir that has, among other things, a low-volume multifunctional mixing zone, a vortex reducing sensor arrangement, and tight sanitary seal gaskets.

Another aspect of the present invention is to provide an automated tangential flow filtration system incorporating therein components and structural configurations suited for the conduct of so-called "clean-in-place" system maintenance processes.

Another aspect of the present invention is to provide a tangential flow filtration system which can be used as part of an advanced size range of fully automated systems providing scalable solutions for processing batch volumes from milliliters to thousands of liters.

Another aspect of the present invention is to provide a tangential flow filtration system with the ability to concentrate a batch volume of a sample liquid to a final volume below 20 milliliters, utilizing, for example, a "Pellicon XL 50" tangential flow filtration membrane cartridge (available from Millipore Corporation of Bedford, Massachusetts), thereby providing a system that bridges the gap between the research laboratory and pilot productions.

Another aspect of the present invention is to provide a "turnkey" system, offering a user all the traditional and advanced tangential flow filtration tools in "one box", and thereby enabling the user to get "up and running" faster in comparison with custom assembled and/or made assemblies.

For further understanding of the nature and objects of the invention, reference should be had to the following description considered in conjunction with the accompanying drawings.

### IV. BRIEF DESCRIPTION OF THE DRAWINGS

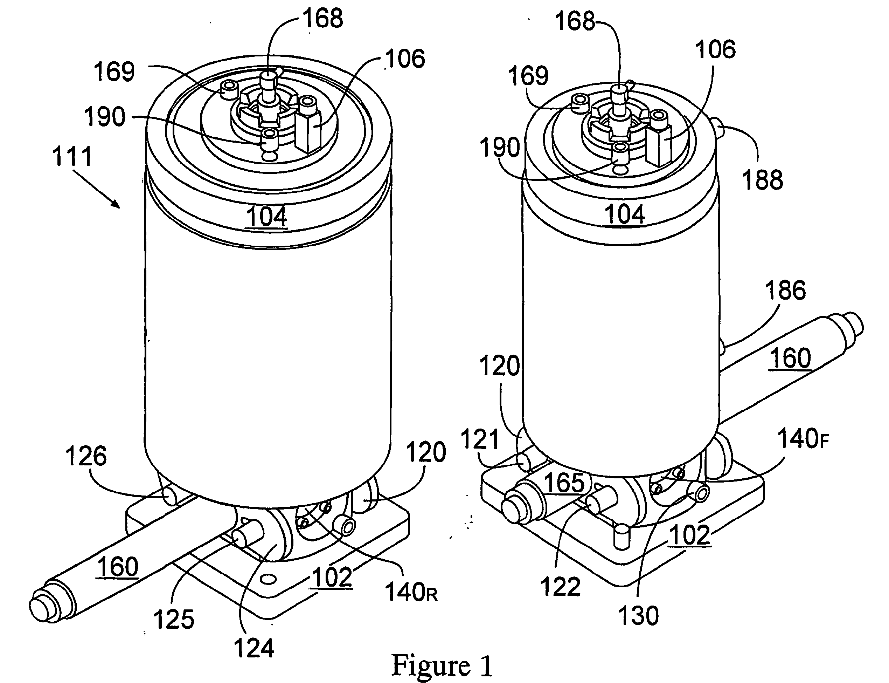

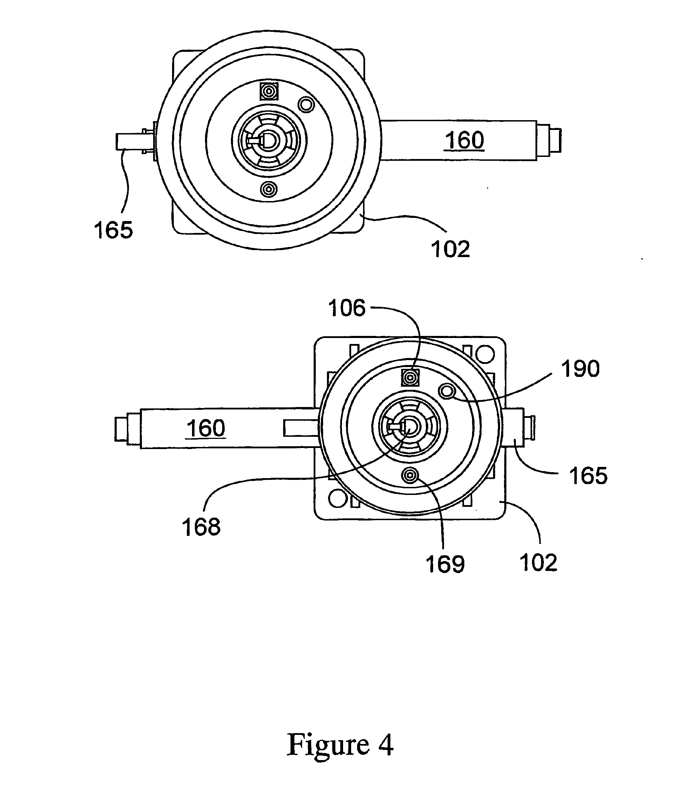

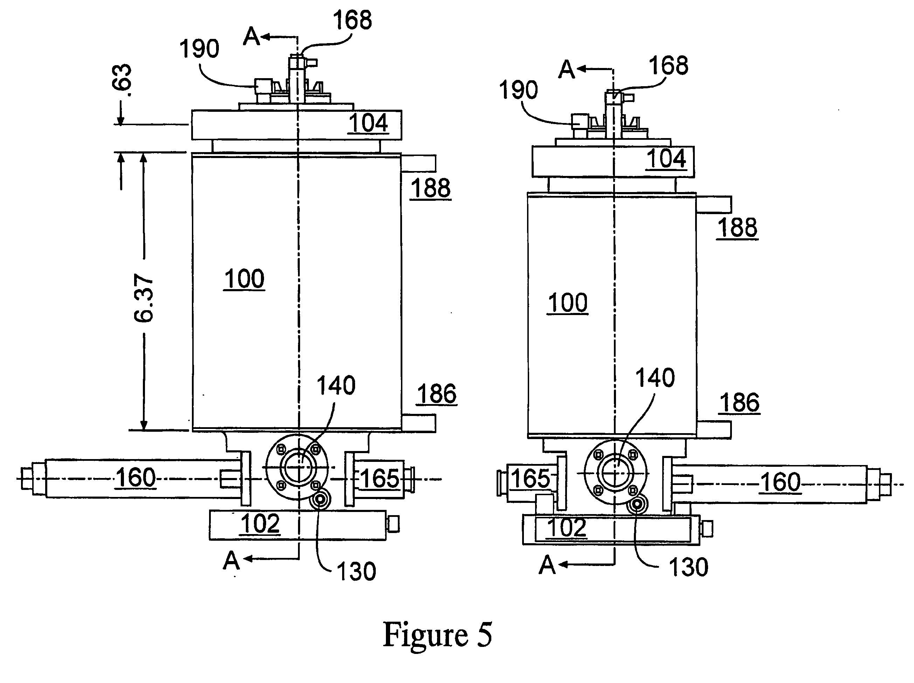

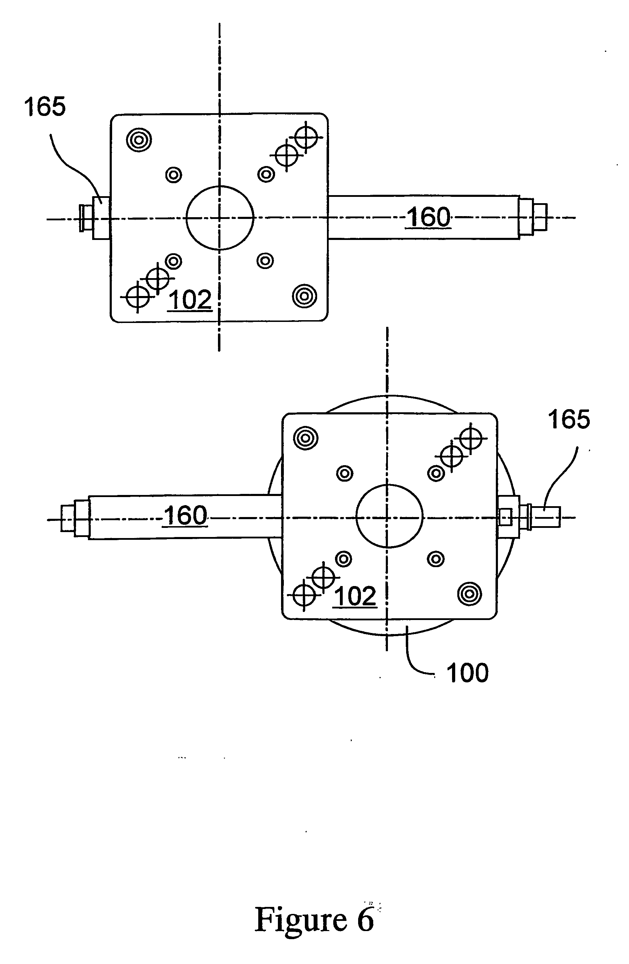

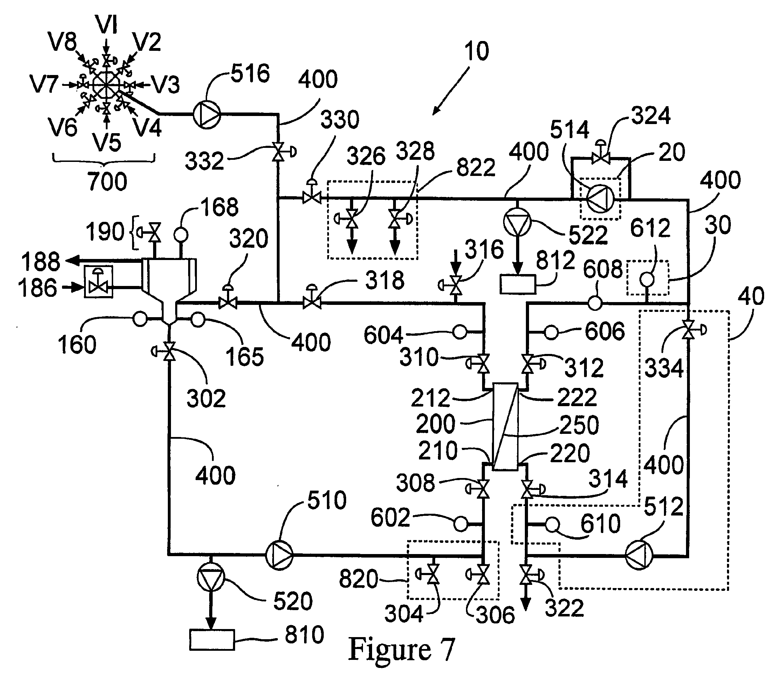

Each of Figs. 1 to 10 provides a schematic representational illustration. The relative locations, shapes, and sizes of certain objects are occassionally exaggerated to facilitate discussion and presentation herein. Certain features, e.g., the wiring of electrical components in Fig. 7, are omitted for clarity.

Fig. 1 illustrates a tank 111 useful as a component of an automated tangential flow filtration system 10 constructed in accordance with the present invention.

Fig. 2 illustrates in cross-section the tank 111 depicted in Fig. 1, revealing further details of the construction of ultrasonic level sensor 168, tank base 102, mixing zone 105, and jacket 180.

Fig. 3 illustrates another cross-section of tank 111, orthogonal to the cross-section of Fig. 2, revealing further details of the construction of air jet port 106, and front and rear sight glasses 140.

Fig. 4 illustrates a top view of tank 111, showing details of the tank lid 104.

Fig. 5 illustrates a side view of tank 111, more clearly showing -- among other things - the placement of retentate port 130 in relation to mixing zone 5.

Fig. 6 illustrates a bottom view of tank 111, configured in accordance with an embodiment of the present invention.

Fig. 7 provides a schematic flow diagram of the automated tangential flow filtration system 10 according to an embodiment thereof. The illustrated embodiment includes additional functional modules that may -- if desired - be incorporated into the basic underlying system. The optional functional modules, set off with dashed lines, includes: a so-called "High-Resolution" Tangential Flow Filtration (HRTFF) Module 20, Ultraviolet Absorbance Module 30, and a so-called "High-Performance" Tangential Flow Filtration (HPTFF) Module 40.

Fig. 8 illustrates an exploded view of a tangential flow filtration module 200 useful as a component of the automated tangential flow filtration system 10 according to the present invention.

Fig. 9 illustrates another tangential flow filtration module 200a useful as a component of an automated tangential flow filtration system 10 according to the present invention. The module is essentially a combination of single tangential flow filtration modules.

Fig. 10 illustrates an electronic data processing network 7 useful as a component of an automated tangential flow filtration system 10 according to the present invention.

Fig. 11 is a schematic representation of reservoir 100, elucidating the bounds of mixing zone 5.

### V. DETAILED DESCRIPTION

In optimizing tangential flow filtration (TFF) processes, researchers often wish to select and qualify certain important elements of the process, for example, membrane element characteristics, configuration, the sequencing of steps, and the allowable range of conditions. In drug development, these early efforts are important because the resultant final process is "locked in", for example, by regulatory filings. An inability to fully investigate operating parameters and ranges due to time and/or labor constraints can jeopardize yields, purity, membrane life, and ultimately frustrate commercial distribution of the product.

The present invention provides an automated tangential flow filtration system capable of generating data for predictable process scale-up. The system is configured to be "linearly" scaleable to a production size system, for example, with respect to feed/recirculation flow to membrane area ratio for a given TFF membrane device, such as the "Pellicon" line of TFF membrane cassettes available from Millipore Corporation of Bedford, Massachusetts.

In respect of its general configuration, the automated tangential flow filtration system -- operable to an unprecedented minimum reliable recirculation volume of approximately 20 milliliters - comprises a reservoir; a tangential flow filtration module; a plurality of conduits defining, together with said reservoir and said tangential flow filtration module, a fluid process stream through which a liquid sample can be conducted; a plurality of pumps, valves, and sensors positioned along said fluid process stream for driving, regulating, and acquiring data about said liquid sample as it flows therethrough; and an electronic data processing network capable of receiving, processing, and recording data from said pumps, valves, and sensors and from an external source (e.g., user input), and transmitting signals to the pumps, valves, and sensors to effect the operation thereof.

All product contact surfaces of the system are desirably, made of FDA compliant and/or USP Class VI tested materials. Furthermore, the system and its components should be compatible with all commonly used solvents for TFF and LPLC. Thus, the system and its components should be compatible with, for example, 1 N NaOh (at 50°C), 400 ppm NaOCl (at 50°C), 1.1% phosphoric acid, 1.8% acetic acid, 2M HCl, 2M urea, "Triton-X" (a non-ionic detergent produced by polymerization of octylphenol with ethylene oxide, available from the Union Carbide Company, Danbury, Connecticut), "Tween" (a polysorbate), 30-50% hexalene glycol, 30-50% propylene glycol, 0.07% polysorbate 20, 0.01-0.02% polysorbate 80, 90% ethanol, 90% methanol, 90% isopropyl alcohol 25% acetonitrile (w/v water).

Desirably, the system should be able to operate in either a "clean room" or "cold room" (*e*.*g*., by incorporation into the system of an anti-condensation heater).

At present, there appears to be no categorical limitation to the separation processes toward which the present invention may be directed. The present invention is well-suited for application in different and various industrial processes, involving process volumes of 0.5 to 2 liters. In respect of viruses, the invention can be used, for example, for the concentration and/or reduction of small batch pharmaceuticals. The present invention may also be used for the concentration, diafiltration, and/or recovery of biomolecules; the harvesting and/or removal of cells; and the depyrogenation of biomolecule solutions.

### A. Tank/Reservoir

One of the key components of the automated tangential flow filtration system 10 is its innovative tank 111, which is characterized in certain respects by the provision therein of certain important sample liquid sensors. A desirable configuration for tank 111 is shown in Figs. 1 to 6.

As shown, the predominant component of tank 111 is substantially cylindrical in shape, rests on tank base 102, and is capped, at its open top, with multifunctional tank lid 104. A tight seal is effected innovatively at both interfaces utilizing sanitary seal gaskets, *i*.*e*., lid gasket 109 and base gasket 119.

Multifunctional tank lid 104 is attachable to, and thereby closes, tank 111, by the provision of clamp 108. The clamp 108 is preferably of the collar clamp type, though others means of attachment (e.g., screws, clips, and the like) can be employed. Multifunctional tank lid 104 is also provided with a number of functional components, *i*.*e*., air jet port 106, ultrasonic level sensor 168, ambient temperature sensor 169, and vent 190.

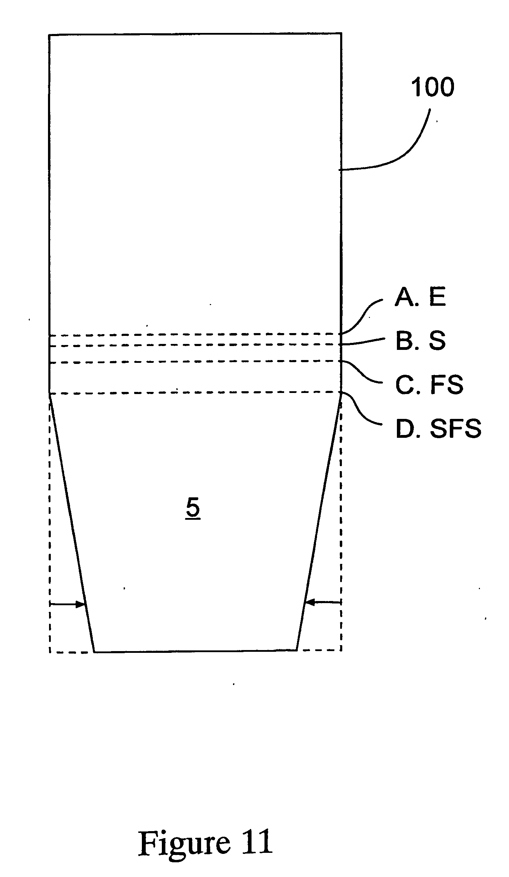

In a preferred embodiment, shown in Fig. 11, the reservoir 100 has a continuous internal volume comprising an upstream substantially-cylindrical enclosure which tapers (or otherwise commences decreasing in internal diameter) at a downstream end into a distinct mixing zone 5. The mixing zone has a substantially fractionally smaller volume than the substantially-cylindrical enclosure and serves as the location where the reservoir inlet, the reservoir outlet, and at least one process stream sensor are positioned.

Provision of vent 190 in tank 111 enables control and maintenance of pressure in tank 111's internal reservoir 100. In one mode of operation (*i.e*., a so-called "blow down" procedure), vent 190 is closed to allow pressure to build up in the system 10 and thereby flush to waste excess liquid trapped within the system.

The other three components installed in tank lid 104 work together for the accurate determination of the liquid level in the tank 111's reservoir 100, central among which is an ultrasonic level sensor 168. By emitting ultrasonic signals and monitoring the reflected signal, sensor 168 can be used to determine fluid level. Ultrasonic level sensors are well known in the art. The preferred sensor is obtainable from Cosense Inc., 155 Ricefield Lane, Hauppauge, New York 11788.

Since the propagation of sound is effected, among other things, by the temperature of the media through which it travels, an ambient temperature sensor 169 is installed in close proximity to the ultrasonic level sensor. Ambient temperature sensor 169 continuously acquires temperature readings, the data therefrom being sent to system 10's data processing network 7, whereupon, it can be factored together with the ultrasonic data for a determination of fluid level.

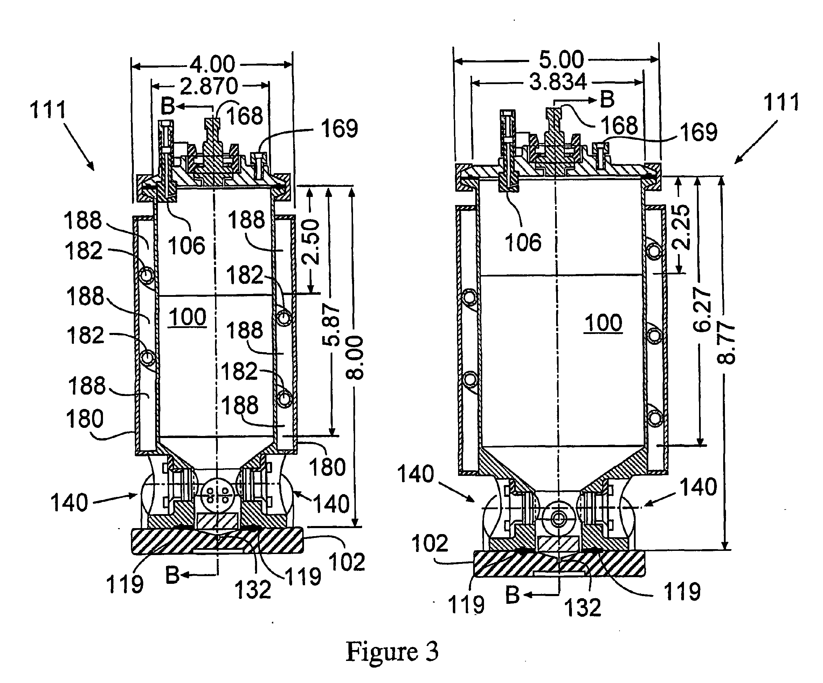

Inasmuch as vapor may accumulate in reservoir 100, attention should be directed toward the effect of condensation on the operation of ultrasonic level sensor 168. To avoid negative effect of such condensation, an air jet port 106 is installed in close proximity to ultrasonic level sensor 168. As best illustrated in Fig. 3, air jet port 106 is designed such that the pressurized transit of an air stream therethrough will be directed (*i*.*e*., through its nozzle) at the face of sensor 168, removing and/or preventing the accumulation of condensation thereon.

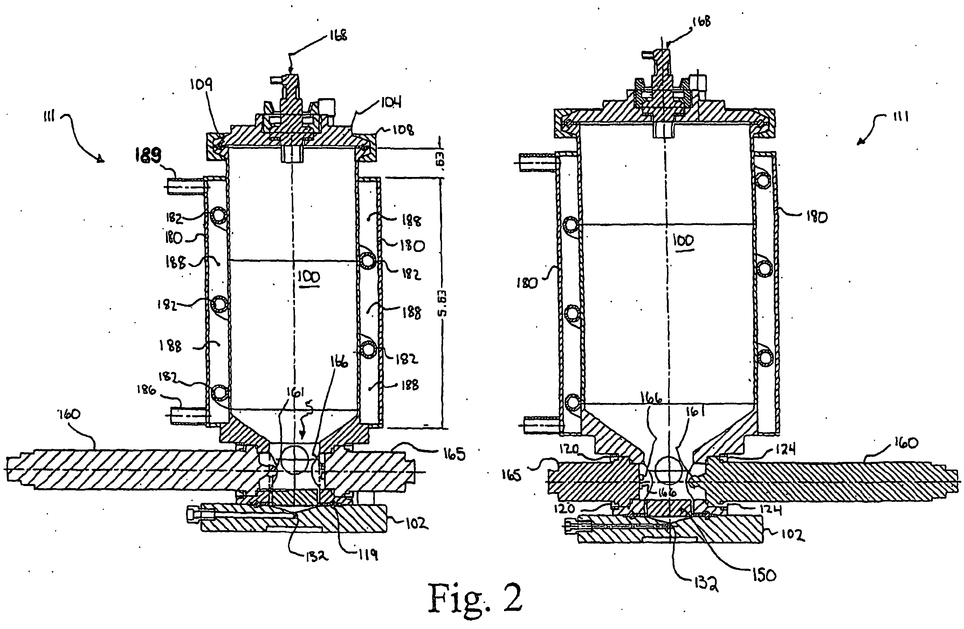

In accord with one aspect of the present invention, at least one of the sensors used to acquire, transmit, and record process information is positioned within the bottom area of the reservoir (see, mixing zone 5 in Figs. 2 and 3). In a preferred embodiment, two sensors (*i.e.*, a pH sensor and conductivity sensor) are installed in this area.

In accordance with a preferred embodiment of the present invention, a plurality of sensors are positioned within tank 111's reservoir 100. In the embodiment illustrated in Figs. 1 to 6, the most important of these sensors (*i*.*e*., tank sensors 160-168) are pH sensor 160 and temperature/conductivity sensor 165. The particular installation of these two sensors is important to the accomplishment of low relative fluid recirculation volumes by the invention. As shown, the functionally-probing end of both sensors protrude into the narrowest bottom-most zone of the reservoir 100, thus allowing the majority liquid level (hence volume) of sample fluid in the reservoir 100 to drain out, yet still have adequate fluid left for analysis and data acquisition. It will also be appreciated that occupancy of this zone 5 is shared with magnetic stirrer 150, hence the fluid in this area is well mixed, allowing for a homogenous sample from which a good reading may be taken.

Those skilled in the art will realize however that the positioning of magnetic stirrer 150 in zone 5 can create a vortex, which may be detrimental to the accomplishment of a low recirculation volume. The present invention resolves this problem by the placement of its sensors. As stated, the functionally-probing ends (*i.e.,* bulb 161 of pH sensor 160 and probes 166 of temperature/conductivity sensor 165) of the sensors protrude into the mixing zone. This effectively creates physical obstacles that prevent, disrupts, or otherwise constrains vortex formation.

In accordance with the preferred embodiment, pH meter 160 is Model 1600-1200-00, and temperature/conductivity meter 165 is Model BT-724, both available from Wedgewood Technology, Inc., 3000 Industrial Way, San Carlos, California 94070. The pH sensor 160 and temperature/conductivity sensor 165 are held in place relative to the reservoir 100 through the agency of sensor attachment plate 120 (using nuts 121 and 122) and sensor attachment plate124 (using nuts 125 and 126).

Base 102 provides a stable support for reservoir 100. It serves also as a manifold, and is provided accordingly with an integrally-formed reservoir outlet 132.

To visually inspect the internal operation of the mixing zone, tank 111 is provided with front and rear sight glasses 140_{F} and 140_{R}. These are essentially glass (or other transparent material) portholes through tank 111 through which an operator can visually inspect sample liquid. Its positioning at the bottom of tank 111 at the mixing zone 5 targets the area in which the more significant tank operations occur, and where foreseeable system occurrence that can lead to failure (or other operational issue) may likely be localized. Thus, one can inspect for example the functionally-probing ends of both sensors, the operation of the magnetic stirrer, the condition and clarity of sample liquid, and the level of the sample liquid as it approaches critical maximum level. Though human visual inspection is the most likely means for observation, the use of machine analysis is also envisaged, for example, by use of photoelectronic devices, such as a spectrophotometer, that can exploit to advantage the clear line of sight provided by the front and rear sight glasses 140_{F} and 140_{R}, and in which case, special attachment means and the use of optical elements (instead of plain glass) can be employed.

To maintain and control system temperature, tank 111 is provided with a jacket 180 surrounding reservoir 100. See Fig. 2. Jacket 180 defines an internal area 188 through which a fluid can be made through flow from fluid inlet 186 and out of fluid outlet 189. In the embodiment shown in Fig. 2, jacket 180 does not cover the mixing zone 5. To ensure that fluid flows completely around the reservoir, thus optimizing the contact area for heat exchange, a serpentine baffle 182 is coiled around the reservoir, ensuring that the cooling/heating fluid spirals around the exterior surface of the reservoir 100 before flowing out of the fluid outlet 189. The fluid can be gaseous or liquid, and can be either pre-heated or pre-cooled, and can be either pressurized or not. Typical fluids are water, synthetic thermally-conductive liquids, oxygen, nitrogen, "freon", and the like. For biopharmaceutical investigation, water will be the likely fluid.

Preferably, the reservoir 100 will have a capacity of about 0.5 to 2.0 liters and will be equipped with both said cooling jacket and said magnetic stirrer and will be configured to allow complete drain age of sample liquid therefrom.

Preferably, the reservoir agitation speed can be set to a constant speed or adjusted by an automatic control function related to the tank level. Such automatic control will cooperate with other design features to prevent the generation of a vortex at low liquid levels.

Although sample liquid is contained in operation on reservoir 100, in typical practice, the reservoir 100 is not the starting point or origin of said sample liquid. Rather, the typical source of fluid dispensed into system 10 is a multi-vessel liquid sample dispenser. An example of such dispenser is schematically illustrated in Fig. 7. As shown therein, a multi-vessel sample dispenser 700 is ultimately lin ked to reservoir 100. Multi-vessel sample dispenser 700 comprises multiple solution vessels V1-V8, each controlled by an electronically-controllable valve, and capable of being filled or otherwise loaded with varying solutions of fluid according to the process parameters of the particular separation application being pursued. Thus, for example, vessels V1-V8 can be filled with alternating solutions of deionized water, cleaning solution, buffer solution, and a biochemical sample solution. The solutions are dispensed independently or in mixture under the electronic control of the system's data processing network 7 according to a preprogrammed regimen loaded and operable thereunder.

### B. Tangential Flow Filtration Module

As shown in Fig. 7, the system 10 employs a tangential flow filtration module 200, which basically comprises a feed inlet 210, retentate outlet 212, a permeate outlet 220, another permeate outlet 222, and a membrane 250. Tangential flow filtration modules are well known in the art. Several types are described and/or disclosed in the patent literature: *See e.g.,* U.S. Pat. No. 6,054,051, issued to R.D. van Reis on April 25, 2000; 4,761,230, issued to J.F. Pacheco *et al*. on August 2, 1988; 5,096,582, issued to A.A. Lombardi *et al*. on March 17, 1992; 5,256,294, issued to R.D. van Reis on October 26, 1993; and U.S. Pat. No. 5,525,144, issued to A.Z. Gollan on June 11, 1996. They are also available commercially: E.g., "Pellicon XL" and "Pellicon 2" TFF cartridges (available from Millipore Corporation of Bedford, Massachusetts 01730); and "Centramate", "Centrasette", "Maximate" and "Maximate-Ext" TFF cartridges (available from Pall Corporation of East Hills, New York 11548). In the practice of the present invention, wherein the attainment of a low recirculation volume is important, the preferred tangential flow filtration modules are the Pellicon line of TFF cartridges, and in particular, the Millipore "Pellicon XL 50".

Representative suitable membrane filters are ultrafiltration, microporous, nanofiltration or reverse osmosis filters formed from polyvinylidene fluoride (PVDF), polysulfone, polyethersulfone, polyarylsulfone, regenerated cellulose, polyamide, polypropylene, polyethylene, polytetrafluoroethylene, cellulose acetate, polyacrylonitrile, vinyl copolymer, polyamides (such as "Nylon 6" or Nylon 66") polycarbonate, PFA, blends thereof or the like. Suitable polymeric sealing compositions are those which provide the desired sealing configuration within the filtration apparatus and do not significantly degrade the elements forming the apparatus including the membranes, spacer layer ports, and housing elements. In addition, the sealing composition should not degrade or provide a significant source of extractable during the use of the apparatus. Representative suitable sealing compositions are thermoplastic polymer composition including those based on polypropylene, polyethylene, PFA (perfluoroalkanes), PVDF, polysulfone, polyethersulfone, polyarylsulphone, polyamides, polycarbonate, acrylonitrile-butadiene-styrene (ABS), polyester, blends thereof, filled or unfilled, and the like.

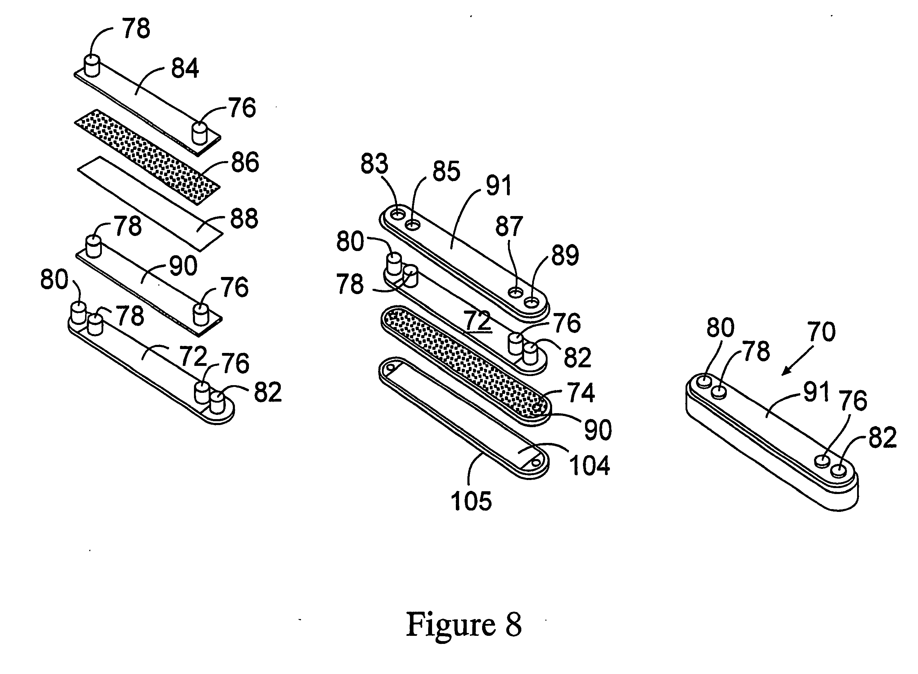

Fig. 8 illustrates one method for making a conventional tangential flow filtration module. The membrane filtration module 70 is formed from modules 72 and 104 and a feed spacer layer 74 and includes two permeate outlet ports 76 and 78, a feed inlet port 80, and a retentate outlet port 82. The module 72 is formed from an end cap 84, permeate screen 86, and a membrane 88. In the first step, the end cap 84, permeate screen 86 and membrane 88 are placed into a mold and are presealed to form a first overmolded element 90. The overmolded element 90 then is placed in a second mold and a plastic composition is molded about overmold element 90 to form second overmold element 72, including retentate outlet port 82, feed inlet port 80 amd an end cap 91. End cap 91 has holes 83, 85, 87, and 89 to accommodate ports 76, 78, 80, and 82. The feed spacer 74 is formed by molding a rib 90 about the screen 74. Module 104 also is formed from an end cap 105, a permeate screen 86, and a membrane 83 in the same manner as module 72. Suitable seals are provided, such as with an adhesive, solvent bonding, ultrasonic welding, or the like to assure that permeate does not mix with feed or retentate while permitting formation of a permeate stream and a retentate stream.

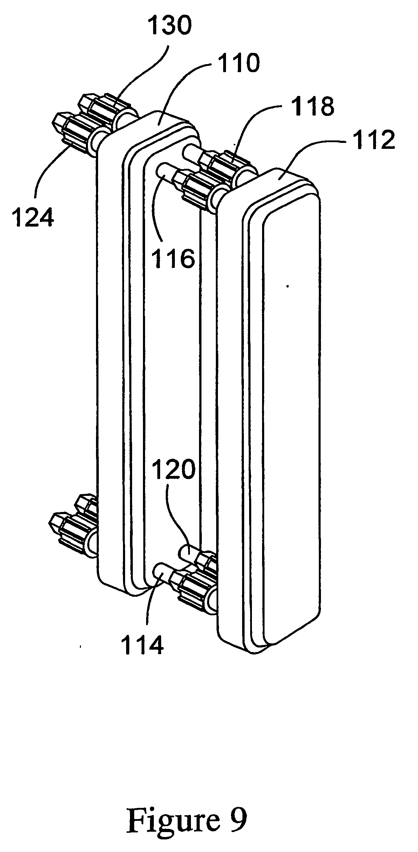

Referring to Fig. 9, two filtration modules 110 and 112 are shown connected to each other by feed connection 114, retentate connection 116, and permeate connection 118 and 120. Feed from the system 10 ultimately enters modules 110 and 112 through connections 122 and 114. Retentate is removed from the modules 110 and 112 through connections 116, 124, and 126. Permeate is removed from the modules 110 and 112 through connections 120, 128, 118, 130 and 132. The apparatus shown in Fig. 9 provides increased filtration capacity as compared to an apparatus utilizing a single filtration module.

The system is equipped with an easy-connect interface for Pellicon XL TFF devices. Pellicon devices are linearly scalable to unlimited large size industrial installations because flow channel dimensions and membrane types are kept identical for all device sizes. It will be appreciated that the present invention can accommodate the use of several tangential flow filtration modules in order to increase its maximum recirculation volume. Although an increase in the total minimum recirculation volume will result from the use of additional modules - *i*.*e*., an increase correspondent with the sum of the internal volumes of each additional module - when expressed as a ratio that considers the number of modules used, the resultant calculated figures are in line with the unprecedented baseline accomplished by present invention.

| Pump l/min | "A" Screen | | "C" Screen | | "V" Channel | |
|---|---|---|---|---|---|---|
| | Devices | m² | Devices | m² | Devices | M² |
| 0.1 | 2 | 0.01 | 1 | 0.005 | 0 | 0 |
| 3.5 | 3 | 0.3 | 2 | 0.2 | 1 | 0.1 |
| 50-70 | 2 | 5 | 1 | 2.5 | 1 | 2 |
| 100-140 | 4 | 10 | 2 | 5 | 2 | 2 |
| 170-210 | 7 | 17.5 | 4 | 10 | 4 | 4 |
| 250-300 | 11 | 27.5 | 6 | 15 | 6 | 6 |
| 340-400 | 15 | 37.5 | 9 | 22.5 | 5 | 10 |
| 550-630 | 24 | 60 | 15 | 37.5 | 8 | 16 |
| 760-850 | 33 | 82.5 | 20 | 50 | 11 | 22 |

In the table, m² refers to the system's membrane area capacity based on pump capacity; an "A" Screen is a flow channel configuration suited for low viscosity and dilute applications; a "B" Screen is a flow channel configuration suited for low to intermediate viscosity applications; and a "C" Channel is a flow channel configuration suited for high viscosity and high product concentrations.

A typical embodiment of the present invention will have a (a) scalable concentration ratio matching the capability of larger systems and the ability to concentrate solutions to a final volume of 20 ml using 50 cm2 TFF XL devices; (b) pressure capability to 413.69 kPa (60 psi) at 55°C; (c) process temperature capability to 55°C; (d) system accuracy to 2-3% of full range; (e) validatable; (f) compliant with applicable public- and/or private-sector standards and/or regulatory requirements.

### C. Conduits

As shown in the automated tangential flow filtration system 10 of Fig. 7, a collection of conduits 400 are provided (or otherwise present) to establish passageways and avenues for the circulation and/or flow of sample liquid to or among the various system components and sub-modules. While the number, pattern, and complexity of the conduits will vary depending on the number of system components and sub-modules, in a basic embodiment of the inventive system, the conduits 400 should at the least define, together with the reservoir 100 and the tangential flow filtration module 200, a fluid process stream through which the liquid sample is conducted, the process stream flowing from said reservoir 100, into said tangential flow filtration module 200, and back to said reservoir 100.

There is no particular limitations to the type of conduit used. Potential conduit types including, for example, rigid pipes, flexible tubing, and the channels and passages formed in or intrinsic to the system 10's other components (*e.g*., the system 10's valves and pumps). Typically, the plurality of conduits employed in a system 10 will include a mixture of such conduit types. In the preferred embodiment of the system 10, the bulk of the conduits employed are flexible, substantially biologically inert, synthetic polymeric tubing having an internal diameter of approximately .100 inches (0.254 cm).

Although sample liquid is intended to be circulated and recirculated between the reservoir 100 and the tangential flow filtration module 200 during system operation, to withdraw samples and/or collect product from time to time as desired, the system 10 is purposefully configured not as an entirely "closed" system. Along these lines, suitable mechanisms are incorporated to allow for the removal of sample fluid from the fluid process stream. The location and design of such mechanisms are not particularly critical to the broadest definition of the present invention. Regardless, for purposes of illustration, reference is made to Fig. 7, wherein pre-TFF sample collector 810 and post-TFF sample collector 812 are provided strategically before and after tangential flow filtration module 200 to allow removal of comparatively small volumes of sample liquid from the fluid process stream for later analysis and/or disposal.

In the embodiment represented in Fig. 7, collectors 810 and 812 are particularly configured together and in cooperation with the system 10's electronic data processing network, to allow a user to program for release specifiable (comparatively small) volumes of sample liquid. For withdrawal of larger volumes of sample liquid, the system 10 is provided with pre-TFF outlet 820 and post-TFF outlet 822. In contrast to the pre- and post-TFF sample collectors 810 and 812, the pre- and post-TFF outlets 820 and 822 - though also under the system's electronic data processing sub-module - are not "volume-specifiable".

### D. Valves

In accord with the present invention, a plurality of valves are positioned along the fluid process stream for regulating the flow of liquid sample therethrough. In operation, flow of liquid through the valve will depend upon whether the valve is in an "open" or "closed" state or - in some circumstances - an intermediate state.

In the automated tangential flow filtration system 10 illustrated in Fig. 7, two types of electronically-controlled, in-line, solenoid valves are employed: *i*.*e*., (a) valves capable only of an "open" or a "closed" state (*e.g.*, solenoid diaphragm valves available from NResearch, Inc. of West Caldwell, New Jersey 07006), and (b) valves capable of a range of states between a fully "open" position and a fully "closed" position (*e.g.*, proportionally-controllable solenoid valves, also available from NResearch, Inc.)

The "open-and-close" type valves have one primary regulatory function: *i.e.,* they dictate whether the fluid process will or will not be conducted further along downstream conduits. The proportional valves also have that function, but they additionally function to - as a consequence of their capacity to maintain intermediate "open" states - influence the pressure of the downstream and upstream pressure of the fluid process stream. This function is particularly relevant to the operation of valve 318, and specifically, its ability to accommodate transmembrane pressure differentials that often accompany usage of TFF-type membrane modules (*e.g.*, TFF module 200).

Regardless of type, each valve implemented in practice of the present invention should be considered in respect of its placement, structure, and operation with an eye toward minimizing, or more preferably, eliminating so-called "dead-space volume" in the system 10.

The following table sets forth the type (*i.e*., "proportional" or "open/close") and basic function of certain of the valves used in the system 10 illustrated in Fig. 7.

| **Valve** | **Type** | **Function** |
|---|---|---|
| Valve 302 | Open/Close | Tank "shut-off" valve; Regulates passage of sample fluid out of reservoir 100 |
| Valve 304 | Open/Close | Pre-membrane sample recovery drain valve |
| Valve 306 | Open/Close | Pre-membrane sample waste drain valve |
| Valve 308 | Open/Close | Regulates passage of sample fluid (feed) Into TFF module 200 through feed inlet port 210 |
| Valve 310 | Open/Close | Regulates passage of sample fluid (retentate) out of TFF module 200 through retentate outlet 212 |
| Valve 312 | Open/Close | Regulates passage of sample fluid (permeate) out of TFF module 200 through permeate outlet 222 |
| Valve 314 | Open/Close | Regulates passage of sample fluid (permeate) out of TFF module 200 through permeate outlet 220 |
| Valve 316 | Open/Close | Regulate so-called "blow-down" fluid for flushing system 10 |
| Valve 318 | Proportional | Used to regulate back pressure in TFF module 200 and thereby accommodate pressure differentials therein |
| Valve 320 | Open/Close | Regulates passage of sample fluid into reservoir 100. |
| Valve 322 | Open/Close | Filtrate drain valve |
| Valve 324 | Open/Close | Regulates bypass of sample fluid around HRTFF filtrate pump 314 |
| Valve 326 | Open/Close | Post-membrane sample waste drain valve |
| Valve 328 | Open/Close | Post-membrane sample recovery drain valve |
| Valve 330 | Open/Close | Filtrate recirculation valve |
| Valve 332 | Open/Close | Regulates the passage of sample fluid from liquid sample source 700 into the automated TFF system 10. |
| Valve 334 | Open/Close | Regulates passage of sample fluid into the co-flow HPTFF module 40 |

All valves identified in the above table are equipped with electric actuators for "on"/"off" analog control by the system 10's data processing network. Such electric actuators are known to those in art. There are no limitation to the invention in the selection of specific types thereof. For example, the valves could also be pneumatically operated. With the exception of valve 318, all valves identified in the above table are "normally closed" in the system 10, *i*.*e*., they remain in a "closed" state unless activated by and thereby urged into an "open" state by system 10's data processing network.

### E. Pumps

In accordance with the practice of the present invention, a plurality of pumps are positioned along the system's fluid process stream in order to drive the flow of liquid sample therethrough. While pumps are preferred, other electronically-controllable means for driving sample liquid through the fluid process stream would seem available for employment in alternative embodiments.

Regardless of such alternative embodiments, in the automated TFF system illustrated in Fig. 7, essentially two types of "in-line" pumps are utilized, *i*.*e*., high-pressure positive displacement (HPPD) pumps and solenoid-activated diaphragm pumps. The system 10 of Fig. 7, of course, is only a preferred embodiment. Other pump configurations and types -- *e.g.*, piezoelectric-driven, acoustically-driven, thermopneumatically-driven, electrostatically-driven, *etc*. - can be employed. Potentially useful fluidic micropump devices are disclosed, and/or suggested, and/or mentioned in, for example, U.S. Pat. No. 5,338,164, issued to R.F. Sutton et al. on August 16, 1994; U.S. Pat. No. 4,938,742, issued to J.G. Smits on July 3, 1990; U.S. Pat. No. 6,283,718, issued to A. Prosperetti *et al*. on September 4, 2001; and U.S. Pat. No. 5,759,015, issued to H. Van Lintel on June 2, 1998.

The solenoid-actuated diaphragm pumps (*i.e.,* pumps 520 and 522) are a self priming, micro-dispensing, solenoid actuated micro pumps, capable of providing a non-metallic, inert fluid path for the dispensing of high purity or aggressive fluids. Such pumps are available from Bio-Chem Valve, Inc. of Boonton, New Jersey 07005.

The high-pressure positive displacement (HPPD) pumps operates such that the driven flow of liquid sample does not change with changes in back pressure. In Fig. 7, the members of this class of pumps are HPPD Pump 510, HPPD Pump 512, HPPD pump 514, and HPPD Pump 516. The preferred HPPD pumps are rotary reciprocating pumps such as disclosed in U.S. Pat. No, 5,863,187, issued to D.S. Bensley *et al*. on January 26, 1999, and available from lvek Corporation of North Springfield, Vermont 05150. In the interest of reducing the system's required recirculation volume, the HPPD pumps are configured to eliminate or otherwise reduce the so-called "dead spaces" where fluid can collect.

For certain biopharmaceutical applications in which the sample liquid under investigation has substantial and significant protein content, good practice of the present invention will involve avoidance or mitigation of those forces and circumstances that can lead to the unintended and undesired denaturation of said proteins (*i.e.,* the loss of the physical conformation of the protein's polypeptide constituency). The mechanical shear forces often produced in the operation of certain pumps, particularly at gas/liquid interfaces (*cf*. *e*.*g*., bubbles), have been linked to protein denaturation, and accordingly, should be mitigated and/or avoided in the selection, manufacture, and incorporation of the system 10's pumps 510-522.

### F. Sensors

In accordance with the present invention, a plurality of sensors are positioned along the fluid process stream, each sensor capable of acquiring data about the liquid sample flowing in their respective areas of sensitivity. The types of data of concern are those pertaining to the tangential flow filtration processes sought to be performed, and will typically include, but is not limited to, temperature, pH, pressure, concentration, flow rate, conductivity, and the like. Any detectors, probes, meters, and like sensing devices capable of acquiring such data can be utilized in embodiments of the automated tangential flow filtration system. Those skilled in the art will know of objectives for and methods of incorporating such sensing devices into the system. Incorporation will involve, among other things, establishment of connectivity with the data processing network 7.

Regardless of the latitude for variation, a preferred collection of sensors is disclosed in the automated TFF system 10 illustrated in Fig 7. More particularly, aside from the sensors used in connection with the reservoir 100, the system 10's sensors include: feed pressure sensor 602, retentate pressure sensor 604, upper filtrate pressure sensor 606, filtrate flow meter 608, lower filtrate pressure 610, and filtrate UV meter 612. The following table provides manufacturer and basic functional data for each of these sensors.

| **Sensor** | **Manufacturer** | **Function** |
|---|---|---|
| Feed Pressure 602 | Foxboro ITC #19-100G-KOC | Sensor used for acquiring information regarding the pressure at the inlet of the feed channel of the TFF device. |
| Retentate Pressure Sensor 604 | Foxboro ITC #19-100G-KOC | Sensor used for acquiring information regarding the pressure at the outlet of the feed channel of the TFF device. |
| Upper Filtrate Pressure Sensor 604 | Foxboro ITC #19-100G-KOC | Sensor used for acquiring information regarding the pressure at the outlet of the filtrate channel of the TFF device. |
| Filtrate Flow Meter 608 | Badger Meter EMAC-40 | Meter used for acquiring information regarding the flow at the outlet of the filtrate channell. |
| Lower Filtrate Pressure 610 | Foxboro ITC #19-100G-KOC | An optional meter used for acquiring information regarding the lower filtrate pressure in the so-called "co-flow" loop, said information being important in HPTFF analyses. |
| Filtrate UV Meter 612 | Wedgewood AF44 | An optional meter used for acquiring information regarding the UV absorbance of molecules in the filtrate fluid. |

### G. Electronic Data Processing Network

The automated tangential flow filtration system of the present invention is provided with an electronic data processing network for receiving, processing, and recording data from, for example, the system's pumps, valves, and sensors and from an external source (*i.e.,* user input), and for transmitting signals (or other electronic instructions) to, for example, the pumps, valves, and sensors to effect the operations thereof. The data processing network will comprise circuitry, wiring, a user interface, data storage media, at least one CPU, and other electronic components, arranged to effect electronic connectivity and control of the system components.

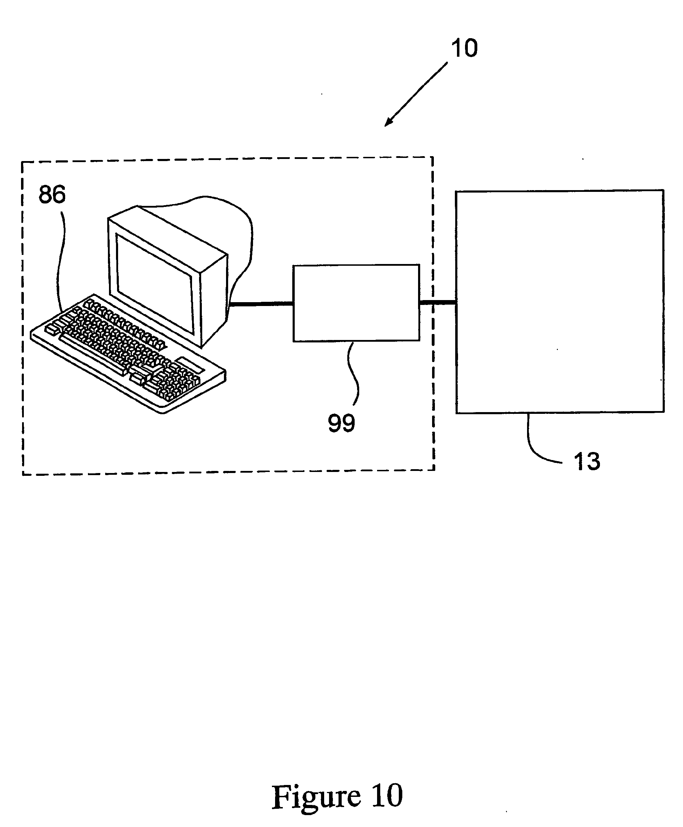

As shown in Fig. 10, the data processing network 7 will include a computer 86 linked to an industrial programmable logic controller (PLC) 99, the programmable logic controller 99 being itself linked to the electronically-controllable TFF hardware (*i*.*e*., the system 10's pumps, valves, tank instrumentation, and sensors). As known to those in the art, the programmable logic controller is essentially a device-specific computer board or component capable of electronically receiving, processing, and transmitting electronic data. The programmable logic controller 99 operates with "raw" data and has embedded operating software therefor. Computer 86 communicates with, and to some extent controls , the programmable logic controller 99. Higher level operations are typically carried out by computer 86. Computer 86 will also typically be provided with input devices for acquiring external information (e.g., a keyboard) and output devices for external dispensation of information (e.g., a monitor, printers, network ports, etc.)

Although it is preferred that computer 86 communicates with the TFF hardware 13 through the intermediary programmable logic controller 99, direct communication is possible. Use of a programmable logic controller 99 afford advantage however in the easier replacement or substitution of computer 86, as well as the enablement of broader variability in its selection.

Certain specific features of and/or comments regarding the electronic data processing network 7, according to a preferred embodiment of the present invention, are outlined below.

The presently preferred software used in computer 86 is described in commonly-assigned U.S. Provisional Pat. App. Att'y Dkt. No. MCA-560, filed on even date by L. Karmiy, B. Wolk, and C. Petersen, entitled "Chemical Process Machine Programming System", and which is hereby incorporated by reference.

The computer 86 is preferably a "notebook"-type personal computer supplied with, among other things, a mouse. (Obviously non-compliant with splash proof rating). The notebook PC is connected to the PLC 99 with a standard RJ45 100Mbps Ethernet connection.

The hardware user (operator) interface is preferably from the front side of the system unit at a convenient level, *i*.*e*., sufficient to accommodate persons from 4.5' height.

The power and e-communication plugs are preferably accessible from the side of the system unit, for example, using a recessed box with a cover to maintain "Nema" rating. The system 10 is preferably configured to accept standard PC power cords for international connectivity provided that the Amp rating is sufficient.

The system control software is preferably "user switchable" between bar and psi.

The electronic data processing network preferably includes a "Common Control Platform" (CCP) (available from Millipore Corporation of Bedford, Massachusetts), the CCP being OPC compliant and capable of enabling the system to easily interface with other control platforms without customized programming. The CCP links all operations in the biopharmaceutical purification suite to a single automation, data acquisition, and batch reporting system. Using a single control system for all separation requirements significantly improves reliability and reduces the cost of operator training and system validation.

Preferably, the system display screen is provided to show the current process status, including valve positions, pump parameters, and the current active flow path All sensor information is shown in real time in both numeric and graphical formats. Changes to operating parameters and set point values are easily made by accessing an appropriate pull down menu. Process alarms, method status, and real time trends are displayed separately beneath the process synoptic. Alarms remain active until acknowledged and a fault condition is rectified.

Preferably, pump/motor speed performance elasticity should exceed a turndown ration of 1 to 20. Retentate and permeate flow meters are fully functional with minimally conductive fluid. Level transmitted is accurate with WFI and with agitation in the tank.

Preferably, the system 10 is provided with a pump run time counter for maintenance purpose.

Preferably, information of differential pressure between feed and retentate ports on the TFF 200 module is used by the data processing network 7 to control the speed of the recirculation pump. This approach will ensure that the pressures are maintained during processing and automatically turn the pump speed down should the viscosity increase during processing. Alternatively, the feed rate can be the controlled parameter.

Preferably, analog level control is provided to enable, in cooperation with the electronic data processing network, constant volume diafiltration for optimum use of dialysate and for high efficiency removal of small molecular species. The level control can also used to allow processing of batches of sample liquid larger than the volume capacity of the system 10's reservoir 100. This can be accomplished by transferring feed from a larger auxiliary reservoir via a port on the selection valve.

Preferably, the system 10, at the behest of the electronic data processing network 7, will sound an alarm (or otherwise provide notice to a system operator) when predetermined "high" limit alarm settings are exceeded. The electronic data processing network 7 can also be configured to shut down the system 10 when, for example, a "high-high" safety limit is exceeded; though, certain "high-high" safety limits may need to be protected from being disengaged, disabled, or otherwise circumvented in such manner.

### H. Functional Sub-Modules

The assemblage of the automated tangential flow filtration system 10 of the present invention can be characterized as a collection of modular functional blocks surrounding a core functional unit (*i.e*., the unit consisting only of those components immediately responsible for conducting the basic automated tangential flow filtration process). Ease of access to, substitution of, and replacement off each of the modular functional blocks leads to commercial and functional flexibility, and allows latitude for expansion by, for example, the addition of other (optional) functional modules. Certain of such optional functional modules are presented in Fig. 7.

In Fig. 7, the optional functional modules in the flow diagram are set off by dashed lines, *i.e.*, a "High-Resolution" Tangential Flow Filtration (HRTFF) Module 20, an Ultraviolet Absorption Module 30, and a "High-Performance" Tangential Flow Filtration (HPTFF) Module 40. A system 10 assembled without said options will still provide fully automated TFF test capability. Further, any information display monitors included in the data processing network, preferably, will display information pertinent only to installed options.

The so-called "High Resolution Tangential Flow Filtration" (HRTFF) process is often employed to improve the separation of soluble proteins from, for example, suspended solids during clarification with microporous membranes and viruses during virus diafiltration with ultrafiltration modules. HRTFF typically employs a second pump (*f*., pump 514) installed downstream from a permeate port to allow flux and transmembrane control. Without HRTFF some separation can result in poor separation resolution as a result of, for example, membrane polarization (*i.e*., substances in the feed solution collecting on or near the surface of the membrane) or membrane fouling. A two-pump HRTFF system can prevent or mitigate such occurrence. In the present invention, the HRTFF module 20 comprises filtrate pump 514, and supporting conduits 400 and connectivity to the data processing network 7.

The Ultraviolet Absorption Module 30 is used for photometric analysis of the fluid process stream, and which is particularly useful in assessing the protein concentration thereof. In the present invention, the Ultraviolet Absorption Module 30 comprises ultraviolet sensor 612, and supporting conduits 400 and connectivity to the data processing network 7.

The so-called "High-Performance Tangential Flow Filtration" (HPTFF) process has been demonstrated to produce up to 1000 fold purification factors of protein mixtures containing similarly sized species. This is normally not possible in traditional size-exclusion based membrane processes. HPTFF technology exploits differences in the size and thickness of the ionic cloud surrounding proteins. This thickness can be manipulated by charging pH and ionic strength of the solution. For example, albumin, which has a molecular weight of 64,000 kD can behave as a 300,000 - 400,000 kD molecule in the right buffer environment. Further details regarding HPTFF technology can be found, for example, in R. van Reis *et al*., Biotech, Bioeng., 56, 71-82, 1997; S. Saksena *et al*., Biotech. Bioeng., 43, 960-968, 1994; R van Reis *et al*., J. Membrane Sci., 129, 19-29, 1997; S. Nakao *et al*., Desalination, 70, 191-205, 1988; U.S. Pat. No. 5,256,294, issued to R. van Reis in 1993; and U.S. Pat. No. 5,490,937, issued R. van Reis in 1996.

The automated tangential flow filtration system 10, by incorporating a so-called "co-flow" loop and control, automatically alters the central automated TFF conditions and operating parameters to allow performance of HPTFF purification techniques. The "co-flow" assemblage comprises "co-flow" pump 512, "co-flow" valve 334, lower filtrate pressure sensor 610, and supporting conduits 400 and connectivity to the data processing network 7. The "co-flow" loop and control provides the ability to maintain a constant transmembrane pressure (TMP) along the length of the TFF module 200. This is important for processing solutions for which molecular retention is affected by the TMP. In some cases, operation at a higher TMP can reduce the retentive capability of a membrane and yet in other cases increase the retention of small species for which the objective is to pass the membrane.

In addition to optional modules 20, 30, and 40, the automated tangential flow filtration system 10 includes a so-called "cartridge-blowdown" feature as part of one of its "canned" operations, important to the provision of so-called "clean-in-place" (CIP) capability. Preferably, the system 10 is sanitizable using CIP procedures to reduce the level of bacterial contamination down to below 1 CFU/ml.

### VI. EXAMPLES

### Example 1

An automated tangential flow filtration system according to the present invention is configured in accordance with the parameters set forth in the following Table:

| **Parameter** | **Value** |
|---|---|
| Membrane Area | 50 cm² |
| Minimum Recirculation Volume | < 20 ml/ PXL 50 |
| Concentration Ratio | < 1 liter/m2 |
| Starting Volume | 200 ml to 1L |
| Feed Pressure | 6 Bar (86 psi) |
| Feed Flow Rate | Up to 100 ml/min |
| Process Temperature | 4-55°C |
| pH | 1-14 |
| Tanks | 1000 mL Recycle |
| Device Holder | PXL Standard |

| Pumps: | |
|---|---|
| - Feed (range) | 0-100 ml/min at 80 psi |
| - Filtrate (range) | 0-50 ml/min at 10 psi |
| - Coflow (range) | 0-100 ml/min at 80 psi |
| - Transfer (range) | 0-100 ml/min at 10 psi |
| Valves | On/Off |
| | - Retentate Back Pressure |
| | - 8 Port Selector |

| Pressure Indicators | |
|---|---|
| - Feed | Range: 0-6 bar (90 psi) Accuracy: +/- 0.5% FS |
| - Retentate | Range: 0-6 bar (90 psi) Accuracy: +/- 0.5% FS |
| - Filtrate 1 | Range: 0-6 bar (90 psi) Accuracy: +/- 0.5% FS |
| - Filtrate 2 | Range: 0-6 bar (90 psi) Accuracy: +/- 0.5% FS |
| Flow Indicators | |
| - Feed w/ Totalizer | Range: 0-100 ml/min Accuracy: +/- 1% FS |
| - Filtrate w/ Totalizer | Range: 0-60 ml/min Accuracy: +/- 1% FS |
| - Transfer w/ Totalizer | Range: 0-100 ml/min Accuracy: +/- 1% FS |
| Temperature | Feed |
| - Indicator | Range: 0-100°C ; Accuracy: +/- 1°C |
| - Control | Range: 4-50°C; Accuracy +/- 1°C |
| Level | Recycle Tank |
| - Indicator | Range: 0-1000 ml. |
| - Control | Range 0-1000 ml. |
| Mixing | Recycle Tank |
| - Agitator | Range: 20-1000 ml |
| UV | Filtrate Permeate Line |
| | Range: 280 nm |

As configured, the automated tangential flow filtration system can provide good, consistent operation using comparatively small sample volumes with good data acquisition.

### VII. OTHER EMBODIMENTS

For example, alternative embodiments can include, but are not limited to, the following constructions:
an adapter manifold capable of operating, for example, a tangential flow filtration module comprising three "Pellicon XL"-type TFF cartridges, including collective permeate plumbing;
a data processing network having an expanded batch recording feature that includes data fields for TFF cartridge lot number and release data (*e*.*g*., integrity and membrane water flux data);
a data processing network wherein the means for receiving data from an external source is or includes a data reading device for reading machine readable data encoded on, for example, TFF cartridge labels and/or packaging, said data reading device including magnetic strip readers, bar code readers, optical scanners, and the like, said machine readable data including digitally encoded information recorded or printed on media, high and low density 2D and 3D bar codes, optical recordations, and the like;
a data processing network capable of acquiring, recording, and processing information pertinent to system maintenance and calibration, said information including, for example, components requiring maintenance and calibration, servicing dates (historic and future), pump run time count information, and so-called "clean-in-place" count information;
a functional sub-module for conducting self-validation tests and, in the course thereof, generating OQ test documents, whereby comparative analysis of original factory-conducted validation tests results and subsequent user-conducted validation test results can yield information pertinent to the system's performance over time; and
a disposable plumbing train.

These and like modifications are to be construed as being encompassed within the scope of the present invention as set forth in the appended claims.

## Claims

1. An automated tangential flow filtration system useful for conducting separations and acquiring process data thereabout and operable to a minimum recirculation volume of approximately 20 milliliters, the system comprising:
(a) a reservoir (100) suitable for containing a fluid sample and having a reservoir inlet and reservoir outlet (132), said reservoir (100) having a continuous internal volume comprising a substantially cylindrical upstream enclosure which tapers at a downstream end into a distinct mixing zone (5), said mixing zone (5) having a substantially fractionally smaller volume than the substantially cylindrical upstream enclosure, said reservoir inlet and reservoir outlet (132) being positioned in said mixing zone (5), and wherein said reservoir (100) further comprises means (150) for mixing said liquid sample, said mixing means (150) being positioned proximate to the bottom surface of said mixing zone (5);
(b) a tangential flow filtration module (200) having a feed inlet (210), a retentate outlet (212), a permeate outlet (220), and a membrane-(250) capable of separating the liquid sample into a retentate stream and a permeate stream upon passage of said liquid sample into the tangential flow filtration module (200) through the.feed inlet;
(c) a plurality of conduits (400) defining, together with said reservoir (100) and said tangential flow filtration module (200), a fluid process stream through which said liquid sample is conducted, said process stream flowing at least from said reservoir (100), into said tangential flow filtration module (200), and back to said reservoir (100);
(d) a plurality of pumps (510-522) positioned along said fluid process stream for driving the flow of said liquid sample therethrough;
(e) a plurality of valves (302-334) positioned along the fluid process stream for regulating the flow of said liquid sample therethrough;
(f) a plurality of sensors (160-169,602-612) positioned along said fluid process stream for acquiring data about the liquid sample flowing therethrough, at least one (160,165) of said plurality of sensors positioned within said mixing zone (5) of said reservoir (100) such that the functionally-probing end(s) (161,166) thereof protrude(s) into the mixing zone (5), constraining vortex formation; and
(g) an electronic data processing network (7) capable of (i) receiving, processing, and recording data from said pumps, valves, and sensors and from an external source, and (ii) transmitting signals to the pumps, valves, and sensors effecting the operation thereof.

2. The automated tangential flow filtration system of claim 1, wherein at least two (160,165) of said plurality of sensors are positioned within said mixing zone (5) of said reservoir (100) such that the functionally-probing ends (161,166) thereof protrude into the narrowest bottom-most zone of the reservoir (100).

3. The automated tangential flow filtration system of claim 2, wherein said sensors positioned within said mixing zone (5) comprise a pH sensor (160) and a temperature/conductivity sensor (165).

4. The automated tangential flow filtration system of any one of claims 1 to 3, further comprising a manifold and a sanitary gasket (119), wherein said manifold provides a base (102) for said reservoir (100), and wherein said sanitary gasket (119) is positioned intermediate said manifold and the bottom surface of said reservoir (100).

5. The automated tangential flow filtration system of claim 4, wherein said manifold serving as the base (102) for said reservoir (100) is integrally provided with said reservoir outlet (132).

6. The automated tangential flow filtration system of any one of claims 1 to 5, further comprising a multifunctional lid (104) attachable to a tank (111) holding said reservoir (100), said lid (104) being provided with a number of functional components.

7. The automated tangential flow filtration system of claim 6, wherein said components provided to the lid (104) comprise sensors (168,169) of said plurality of sensors (160-169,602-612).

8. The automated tangential flow filtration system of claim 7, wherein said sensors comprise an ambient temperature sensor (169) installed in close proximity to an ultrasonic level sensor (168), wherein data from said ambient temperature sensor (169) representing temperature readings being adapted to be sent to said data processing network (7) in which it can be factored together with ultrasonic data from said ultrasonic level sensor (168) for a determination of fluid level within said reservoir (100).

9. The automated tangential flow filtration system of claim 1, further comprising
(h) a clean-in-place module.

## Patentansprüche

1. Automatisiertes Tangentialströmungs-Filtersystem, das zum Durchführen von Trennvorgängen und zum Erfassen von Prozessdaten über diese von Nutzen ist, und das bis zu einem minimalen Rezirkulationsvolumen von etwa 20 Millilitern betreibbar ist, wobei das System umfasst:
(a) einen Behälter (100), der zur Aufnahme einer Fluidprobe geeignet ist und einen Behältereinlass und Behälterauslass (132) aufweist, wobei der Behälter (100) ein kontinuierliches inneres Volumen hat, welches eine im wesentlichen zylindrische stromaufwärtige Umgrenzung umfasst, die an einem stromabwärtigen Ende in eine abgesetzte Mischzone (5) konisch zuläuft, wobei die Mischzone (5) ein im wesentlichen anteilmäßig kleineres Volumen als die im wesentlichen zylindrische stromaufwärtige Umgrenzung aufweist, der Behältereinlass und Behälterauslass (132) in der Mischzone (5) positioniert sind, das Reservoir (100) ferner Mittel (150) zum Mischen der Flüssigkeitsprobe umfassen, und das Mischmittel (150) nahe der Bodenfläche der Mischzone (5) positioniert ist,
(b) ein Tangentialströmungs-Filtermodul (200) mit einem Zuführeinlass (210), einem Retentatauslass (212), einem Permeatauslass (220) und einer Membran (250), die die Flüssigkeitsprobe in einen Retentatstrom und einen Permeatstrom beim Durchlauf der Flüssigkeitsprobe durch den Zuführeinlass in das Tangentialströmungs-Filtermodul (200) trennen kann,
(c) mehrere Leitungen (400), die zusammen mit dem Behälter (100) und dem Tangentialströmungs-Filtermodul (200) einen Fluidprozessstrom festlegen, durch den die Flüssigkeitsprobe geleitet wird, wobei der Prozessstrom mindestens von dem Behälter (100) in das Tangentialströmungs-Filtermodul (200) und zurück zu dem Behälter (100) strömt,
(d) mehrere Pumpen (510-522), die längs dem Fluidprozessstrom positioniert sind, um den Strom der Flüssigkeitsprobe durch diese zu leiten,
(e) mehrere Ventile (302-334), die längs dem Fluidprozessstrom positioniert sind, um die Strömung der Flüssigkeitsprobe durch diesen zu regeln,
(f) mehrere Sensoren (160-169,602-612), die längs dem Fluidprozessstrom positioniert sind, um Daten über die hindurchströmende Flüssigkeitsprobe zu erfassen, wobei mindestens einer (160,165) der mehreren Sensoren in der Mischzone (5) des Behälters (100) so positioniert ist, dass das/die funktionale(n) Sondenende(n) (161,166) desselben/derselben in die Mischzone (5) vorsteht/vorstehen und dabei eine Wirbelbildung einschränken, und
(g) ein elektronisches Datenverarbeitungsnetz (7), das in der Lage ist, (i) Daten von den Pumpen, Ventilen und Sensoren und von einer externen Quelle zu empfangen, zu verarbeiten und aufzuzeichnen, und (ii) Signale zu den Pumpen, Ventilen und Sensoren zu übertragen und deren Betrieb zu bewirken.

2. Automatisiertes Tangentialströmungs-Filtersystem nach Anspruch 1, wobei mindestens zwei (160,165) der mehreren Sensoren in der Mischzone (5) des Behälters (100) derart positioniert sind, dass die funktionalen Sondenenden (161,166) derselben in die engste, dem Boden nächste Zone des Behälters (100) vorstehen.

3. Automatisiertes Tangentialströmungs-Filtersystem nach Anspruch 2, wobei die in der Mischzone (5) positionierten Sensoren einen pH-Sensor (160) und einen Temperatur/Leitfähigkeits-Sensor (165) umfassen.

4. Automatisiertes Tangentialströmungs-Filtersystem nach einem der Ansprüche 1 bis 3, ferner mit einem Verteiler und einer Sanitärdichtung (119), wobei der Verteiler eine Basis (102) für den Behälter (100) bereitstellt und die Sanitärdichtung (119) zwischen dem Verteiler und der Bodenfläche des Behälters (100) positioniert ist.

5. Automatisiertes Tangentialströmungs-Filtersystem nach Anspruch 4, wobei der als Basis (102) für den Behälter (100) dienende Verteiler integral mit dem Behälterauslass (132) vorgesehen ist.

6. Automatisiertes Tangentialströmungs-Filtersystem nach einem der Ansprüche 1 bis 5, ferner mit einer multifunktionalen Abdeckung (104), die an einem den Behälter (100) haltenden Tank (111) anbringbar ist, wobei die Abdeckung (104) mit einer Anzahl von Funktionskomponenten versehen ist.

7. Automatisiertes Tangentialströmungs-Filtersystem nach Anspruch 6, wobei die an der Abdeckung (104) vorgesehenen Komponenten Sensoren (168,169) der Mehrzahl von Sensoren (160-169,602-612) umfassen.

8. Automatisiertes Tangentialströmungs-Filtersystem nach Anspruch 7, wobei die Sensoren einen Umgebungstemperatursensor (169) aufweisen, der in unmittelbarer Nähe eines Ultraschallpegelsensors (168) installiert ist, wobei Daten von dem Umgebungstemperatursensor (169) Temperaturablesungen darstellen, die zu dem Datenverarbeitungsnetz (7) gesendet werden können, in dem sie zusammen mit Ultraschalldaten von dem Ultraschallpegelsensor (168) zur Bestimmung eines Fluidpegels in dem Behälter (100) verarbeitet werden können.

9. Automatisiertes Tangentialströmungs-Filtersystem nach Anspruch 1, ferner mit
(h) einem Reinraummodul "(clean-in-place module").

## Revendications

1. Système automatisé de filtration à écoulement tangentiel destiné à effectuer des séparations et acquérir des données de traitement les concernant et pouvant fonctionner à un volume minimal de recirculation d'environ 20 millilitres, le système comprenant :
(a) un réservoir (100) approprié pour contenir un échantillon de fluide et comportant une entrée et sortie (132) de réservoir, ledit réservoir (100) ayant un volume intérieur continu comprenant une enceinte amont sensiblement cylindrique qui va en diminuant au niveau d'une extrémité vers l'aval pour se terminer en une zone distincte (5) de mélange, ladite zone (5) de mélange ayant un volume sensiblement plus petit du point de vue fractionnel que l'enceinte amont sensiblement cylindrique, ladite entrée et sortie (132) de réservoir étant positionnée dans ladite zone (5) de mélange, et dans lequel ledit réservoir (100) comprend en outre un moyen (150) servant à mélanger ledit échantillon de liquide, ledit moyen (150) de mélange étant positionné au voisinage de la surface de fond de ladite zone (5) de mélange ;
(b) un module (200) de filtration à écoulement tangentiel comportant une entrée (210) d'alimentation, une sortie (212) de retentat, une sortie (220) de permeat, et une membrane (250) capable de séparer l'échantillon de liquide en un flux de retentat et un flux de permeat lors du passage dudit échantillon de liquide dans le module (200) de filtration à écoulement tangentiel par l'intermédiaire de l'entrée d'alimentation ;
(c) une pluralité de conduits (400) définissant, conjointement avec ledit réservoir (100) et ledit module (200) de filtration à écoulement tangentiel, un flux de traitement de fluide à travers lequel est conduit ledit échantillon de liquide, ledit flux de traitement s'écoulant au moins dudit réservoir (100), dans ledit module (200) de filtration à écoulement tangentiel, et en retour vers ledit réservoir (100) ;
(d) une pluralité de pompes (510 à 522) positionnées le long dudit flux de traitement de fluide pour entraîner l'écoulement dudit échantillon de liquide à travers celles-ci ;
(e) une pluralité de vannes (302 à 334) positionnées le long dudit flux de traitement de fluide dans le but de réguler l'écoulement dudit échantillon de liquide à travers celles-ci ;
(f) une pluralité de capteurs (160 à 169, 602 à 612) positionnés le long dudit flux de traitement de fluide pour acquérir des données concernant l'échantillon de liquide s'écoulant à travers ceux-ci, au moins l'un (160, 165) de ladite pluralité de capteurs étant positionné à l'intérieur de ladite zone (5) de mélange dudit réservoir (100) de sorte que son/leurs extrémité(s) assurant une fonction de sonde (161, 166) fait/font saillie dans la zone (5) de mélange, en limitant une formation de vortex ; et
(g) un réseau électronique (7) de traitement de données capable (i) de recevoir, traiter et enregistrer des données provenant desdits pompes, vannes et capteurs et d'une source extérieure, et (ii) d'émettre des signaux vers les pompes, vannes et capteurs pour en assurer le fonctionnement.

2. Système automatisé de filtration à écoulement tangentiel selon la revendication 1, dans lequel au moins deux (160, 165) de ladite pluralité de capteurs sont positionnés à l'intérieur de ladite zone (5) de mélange dudit réservoir (100), de sorte que leurs extrémités assurant une fonction de sonde (161, 166) font saillie dans la zone le plus en bas, la plus étroite, du réservoir (100).

3. Système automatisé de filtration à écoulement tangentiel selon la revendication 2, dans lequel lesdits capteurs positionnés à l'intérieur de ladite zone (5) de mélange comprennent un capteur (160) de pH et un capteur (165) de température/ de conductivité.

4. Système automatisé de filtration à écoulement tangentiel selon l'une quelconque des revendications 1 à 3, comprenant en outre un collecteur et un joint d'étanchéité sanitaire (119), dans lequel ledit collecteur fournit une base (102) audit réservoir (100), et dans lequel ledit joint d'étanchéité sanitaire (119) est positionné entre ledit collecteur et la surface de fond dudit réservoir (100).

5. Système automatisé de filtration à écoulement tangentiel selon la revendication 4, dans lequel ledit collecteur servant de base (102) audit réservoir (100) est réalisé d'un seul tenant avec ladite sortie (132) de réservoir.

6. Système automatisé de filtration à écoulement tangentiel selon l'une quelconque des revendications 1 à 5, comprenant en outre un couvercle multifonctionnel (104) pouvant être assujetti à une cuve (111) contenant ledit réservoir (100), ledit couvercle (104) étant pourvu d'un certain nombre de composants fonctionnels.

7. Système automatisé de filtration à écoulement tangentiel selon la revendication 6, dans lequel lesdits composants disposés sur le couvercle (104) comprennent des capteurs (168, 169) de ladite pluralité de capteurs (160 à 169, 602 à 612).

8. Système automatisé de filtration à écoulement tangentiel selon la revendication 7, dans lequel lesdits capteurs comprennent un capteur (169) de température ambiante installé à proximité immédiate d'un capteur (168) de niveau ultrasonore, dans lequel des données provenant dudit capteur (169) de température ambiante représentant des lectures de température sont adaptées pour être envoyées audit réseau (7) de traitement de données dans lequel elles peuvent être pondérées conjointement avec des données ultrasonores provenant dudit capteur (168) de niveau ultrasonore pour une détermination de niveau de fluide à l'intérieur dudit réservoir (100).

9. Système automatisé de filtration à écoulement tangentiel selon la revendication 1, comprenant en outre
(h) un module de nettoyage sur site.
